(19) Europäisches Patentamt
European Patent Office
Office européen des brevets

(11) Veröffentlichungsnummer: **0 069 908**
**A1**

(12) # EUROPÄISCHE PATENTANMELDUNG

(21) Anmeldenummer: 82105709.8

(22) Anmeldetag: 28.06.82

(51) Int. Cl.$^3$: C 08 L 21/00
C 08 K 5/10

(30) Priorität: 09.07.81 DE 3127102

(43) Veröffentlichungstag der Anmeldung:
19.01.83 Patentblatt 83/3

(84) Benannte Vertragsstaaten:
DE FR GB IT

(71) Anmelder: BAYER AG
Zentralbereich Patente, Marken und Lizenzen
D-5090 Leverkusen 1, Bayerwerk(DE)

(72) Erfinder: Jeblick, Werner, Dr.
Walter-Flex-Strasse 30
D-5090 Leverkusen 1(DE)

(72) Erfinder: Roos, Ernst, Dr.
Am Geusgarten 6
D-5068 Odenthal(DE)

(72) Erfinder: Ruetz, Lothar, Dr.
Wilhelm-Busch-Strasse 37
D-4047 Dormagen(DE)

(72) Erfinder: Schubart, Rüdiger, Dr.
An der Engelsfuhr 27
D-5060 Bergisch-Gladbach 2(DE)

(72) Erfinder: Brück, Dieter, Dr.
Kattowitzer Strasse 34
D-5000 Köln 80(DE)

(72) Erfinder: Königshofen, Heinrich, Dr.
Am Mühlenberg 26
D-5060 Bergisch-Gladbach 2(DE)

(54) **Verfahren zur Stabilisierung von Kautschuk gegen Ozonangriff.**

(57) Verfahren zur Stabilisierung von Kautschuk gegen Ozonangriff durch Zusatz von Ozonschutzmittel, dadurch gekennzeichnet, daß man als Ozonschutzmittel eine Verbindung der Formel

$$(R-\underset{\underset{O}{\|}}{C}-O)_n-R_1$$

in der
n Zahlen von 1 bis 6,
R einen Cyclohex-3-enylrest, der gegebenenfalls durch eine Methylgruppe substituiert sein kann oder einen Bicyclo-(2.2.1)-hept-5-en-2-yl-rest, und
$R_1$ einen gesättigten oder ungesättigten aliphatischen, cycloaliphatischen oder araliphatischen Kohlenwasserstoffrest mit 1 bis 12 C-Atomen, einen aromatischen Kohlenwasserstoffrest mit 6 bis 10 C-Atomen oder einen aliphatischen oder aromatischen heterocyclischen Rest
darstellen,
in wirksamen Mengen einsetzt.

EP 0 069 908 A1

Croydon Printing Company Ltd.

BAYER AKTIENGESELLSCHAFT 5090 Leverkusen, Bayerwerk

Zentralbereich
Patente, Marken und Lizenzen E-by/bo/c

# Verfahren zur Stabilisierung von Kautschuk gegen Ozonangriff

Die Erfindung betrifft ein Verfahren zur Stabilisierung von Kautschuk durch Zusatz von an sich bekannten Carbonsäureestern.

Es ist bekannt, daß aus natürlichen und/oder synthetischen Kautschuken durch Vulkanisation hergestellte Gebrauchsartikel Risse bekommen, wenn ihre Oberfläche unter mechanischer Spannung steht und die Oberfläche gleichzeitig Ozon ausgesetzt ist.

Eine bedeutende Steigerung der Lebensdauer dieser Gummiartikel kann erzielt werden, wenn dem Kautschuk in relativ niedriger Dosierung Derivate des p-Phenylendiamins, wie z.B. N-Phenyl-N'-isopropyl-p-phenylendiamin, zugesetzt werden. Jedoch sind alle bisher bekannt gewordenen wirksamen Verbindungen dieser Art am Licht verfärbend, so daß man sie nur in rußhaltigen Artikeln einsetzen kann. Es kommen aber ferner auch nur solche rußhaltigen Artikel in Frage, bei denen außerdem eine Kontaktverfärbung angrenzender

Materialien nicht zu befürchten ist. Es ist ferner bekannt, daß bestimmte Wachskombinationen für die Verbesserung der Ozonfestigkeit heller Artikel verwendet werden; diese üben zwar eine gewisse Schutzwirkung aus, jedoch nur, wenn der sich an der Oberfläche des Artikels bildende Schutzwachsfilm völlig intakt bleibt. Bei dynamischer Beanspruchung reißt aber der Film leicht auf, und die dann an diesen Fehlstellen gebildeten Ozonrisse sind meistens tiefer und breiter als diejenigen, die ohne Wachszugabe sich bilden. Auch bei intaktem Wachsfilm ist der Schutz unvollkommen, da eine geringe Menge Ozon durch den Film hindurchgeht und so Risse verursacht.

Aus den Deutschen Auslegeschriften 1 693 163 und 1 917 600 sowie aus der Deutschen Offenlegungsschrift 1 668 091 sind Enolether der Formel

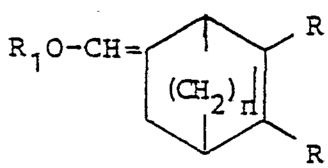

in welcher

$R_1$ für den Rest eines Alkohols,

n für 0 oder 1 und

R für ein Wasserstoffatom oder eine Methylgruppe steht,

als nichtverfärbende Ozonschutzmittel bekannt.

Die Verbindungen besitzen eine nicht vernachlässigbare Flüchtigkeit sowie einen bestimmten unangenehmen Eigengeruch. Weiterhin ist ihre Wirksamkeit vor allen Dingen in der Schutzwirkung von Artikeln aus Polychloroprenkautschuk noch verbesserungsbedürftig.

Die aus der deutschen Offenlegungsschrift 2 548 911 bekannten cyclischen Acetale sind zwar geruchlos und geringer flüchtig, entfalten eine gute Wirksamkeit jedoch nur in bestimmten Kautschuken, wie z.B. Polychloropren.

Aufgabe der vorliegenden Erfindung ist es, ein Ozonschutzmittel bereitzustellen, welches sowohl die Vorteile der Enolether als auch die Vorteile der cyclischen Acetale aufweist, d.h. welches wenig flüchtig und geruchlos ist und eine gute Wirksamkeit in allen Kautschuken besitzt.

Es wurde nunmehr gefunden, daß bestimmte Carbonsäureester diese Vorteile aufweisen.

Die Erfindung betrifft somit ein Verfahren zur Stabilisierung von Kautschuk gegen Ozonangriff durch Zusatz von Ozonschutzmitteln, dadurch gekennzeichnet, daß man als Ozonschutzmittel eine Verbindung der Formel

$$(R-\underset{\overset{\|}{O}}{C}-O)_n-R_1 \quad ,$$

in der

n Zahlen von 1 bis 6, bevorzugt 1 bis 4, besonders bevorzugt 1,

R einen Cyclohex-3-enylrest, der gegebenenfalls durch eine Methylgruppe substituiert sein kann oder einen Bicyclo-(2.2.1.)-hept-5-en-2-ylrest, und

$R_1$ einen gesättigten oder ungesättigten aliphatischen, cycloaliphatischen oder araliphatischen Kohlenwasserstoffrest mit 1 bis 12 C-Atomen, einen aromatischen Kohlenwasserstoffrest mit 6 bis 10 C-Atomen oder einen aliphatischen oder aromatischen heterocyclischen Rest

darstellen,

in wirksamen Mengen einsetzt.

Als gesättigte oder ungesättigte aliphatische, cycloaliphatische oder araliphatische Kohlenwasserstoffreste seien bevorzugt genannt:
Ethyl-, Dodecyl, Cyclohexyl, $\Delta^3$-Tetrahydrobenzyl, $\Delta^3$-Methyltetrahydrobenzyl, Bicyclo(2.2.1)hept-5-en-2-yl-methyl, Benzyl, Pentaerythrityl.

Als Arylreste seien bevorzugt genannt:
Phenyl, halogensubstituiertes Phenyl wie z.B. 4-Chlorphenyl.

Als heterocyclische Reste seien bevorzugt genannt:
Furanyl, Pyridinyl.

Folgende Verbindungen seien einzeln aufgeführt:

$\Delta^3$-Tetrahydrobenzoesäure-ethylester
$\Delta^3$-Tetrahydrobenzoesäure-iso-octylester
$\Delta^3$-Tetrahydrobenzoesäure-dodecylester
$\Delta^3$-Tetrahydrobenzoesäure-benzylester
$\Delta^3$-Tetrahydrobenzoesäure-$\Delta^3$-tetrahydrobenzylester
$\Delta^3$-Tetrahydrobenzoesäure-$\Delta^3$-methyltetrahydrobenzylester
$\Delta^3$-Tetrahydrobenzoesäure-bicyclo-(2.2.1)-hept-5-en-2-yl-methylester
$\Delta^3$-Tetrahydrobenzoesäure-furfurylester
$\Delta^3$-Methyltetrahydrobenzoesäure-cyclohexylester
$\Delta^3$-Methyltetrahydrobenzoesäure-phenylester
$\Delta^3$-Methyltetrahydrobenzoesäure-4-pyridinyl-ester
$\Delta^3$-Methyltetrahydrobenzoesäure-4-chlorphenylester
$\Delta^3$-Methyltetrahydrobenzoesäure-$\Delta^3$-methyltetrahydro-benzylester
$\Delta^3$-Methyltetrahydrobenzoesäure-$\Delta^3$-tetrahydrobenzyl-ester
$\Delta^3$-Methyltetrahydrobenzoesäure-bicyclo-(2.2.1)-hept-5-en-2-yl-methylester
Bicyclo(2.2.1)-hept-5-en-2-carbonsäure-benzylester
Bicyclo(2.2.1)-hept-5-en-2-carbonsäure-cyclohexylester
Bicyclo(2.2.1)-hept-5-en-2-carbonsäure-$\Delta^3$-methyl-tetrahydrobenzylester
Bicyclo(2.2.1)-hept-5-en-2-carbonsäure-$\Delta^3$-tetra-hydrobenzylester
Bicyclo(2.2.1)-hept-5-en-2-carbonsäure-bicyclo(2.2.1)-hept-5-en-2-yl-methylester
Bis($\Delta^3$-tetrahydrobenzoesäure)-benzol-1,4-diol-ester

Bis($\Delta^3$-tetrahydrobenzoesäure)-ethylenglykol-ester
Bis($\Delta^3$-tetrahydrobenzoesäure)-but-2-en-1,4-diol-ester
Bis($\Delta^3$-tetrahydrobenzoesäure)-but-2-in-1,4-diol-ester
Tris($\Delta^3$-tetrahydrobenzoesäure)-glycerin-ester
Hexakis($\Delta^3$-tetrahydrobenzoesäure)-sorbit-ester
Tetrakis($\Delta^3$-methyltetrahydrobenzoesäure)-pentaerythrit-ester
Bis($\Delta^3$-tetrahydrobenzoesäure)-hexahydro-furo-(3,2-b)-furan-3,6-diolester
Bis($\Delta^3$-tetrahydrobenzoesäure)-2-methylen-1,3-propandiol-ester
Bis($\Delta^3$-tetrahydrobenzoesäure)-cyclohex-3-en-1,1-dimethylol-ester
Bis($\Delta^3$-tetrahydrobenzoesäure)-bicyclo(2.2.1)hept-5-en-2,2-dimethylol-ester

Folgende Verbindungen seien als bevorzugt einsetzbar angegeben:

$\Delta^3$-Tetrahydrobenzoesäure-$\Delta^3$-tetrahydrobenzylester
$\Delta^3$-Tetrahydrobenzoesäure-bicyclo(2.2.1)-hept-5-en-2-yl-methylester
Bicyclo(2.2.1)-hept-5-en-2-carbonsäure-$\Delta^3$-tetrahydrobenzylester
Bicyclo(2.2.1)-hept-5-en-2-carbonsäure-bicyclo(2.2.1)-hept-5-en-2-yl-methylester.

Die Carbonsäureester sind bekannt und beispielsweise in US-PS 3 681 438, Chemical Abstracts 61: 14609h, US-PS 3 709 923, Chemical Abstracts 72, 31276K beschrieben.

Sie lassen sich in bekannter Weise gemäß folgender Reaktionsgleichungen herstellen:

1) 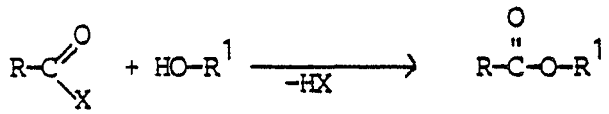


2) 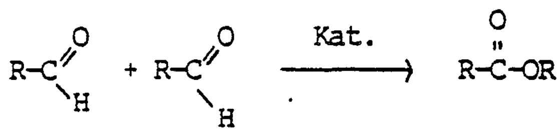


R und $R^1$ haben die eingangs genannte Bedeutung,

X = OH, Cl oder $OCH_3$,

Kat = Aluminiumisopropanolat.

Ein allgemeines Herstellungsbeispiel für die Reaktionsgleichung 1) gestaltet sich beispielsweise wie folgt:

Die Umsetzung von $\Delta^3$-Tetrahydrobenzoesäure mit einem Alkohol kann in Lösungsmittel oder ohne Lösungsmittel erfolgen. Durch Zusatz von sauren Katalysatoren kann die Reaktion beschleunigt werden. Als Katalysatoren können Schwefelsäure, Chlorwasserstoff, Sulfonsäuren oder saure Ionenaustauscher dienen. Arbeitet man ohne Lösungsmittel, dann kann das Veresterungsgleichgewicht durch Überschuß einer Ausgangskomponente, meist Alkohol, verschoben werden. Das gebildete Wasser kann durch die zugesetzte Katalysatorsäure gebunden werden oder beim Arbeiten mit Lösungsmitteln azeotrop aus

der Reaktionsmischung entfernt werden. Als Lösungsmittel eignen sich z.B. Chloroform, Tetrachlorkohlenstoff, Benzol, Toluol und Cyclohexan. Die Aufarbeitung erfolgt nach bekannten Methoden z.B. durch Destillation im Vakuum, Entfernung der flüchtigen Bestandteile am Dünnschichtverdampfer, Umkristallisation usw.

Die Reaktionsgleichung 2 beschreibt die sogenannte Claisen-Tiscenko-Reaktion, die man wie folgt durchführen kann:

$\Delta^3$-Tetrahydrobenzaldehyd wird mit Lösungsmittel oder vorzugsweise ohne Lösungsmittel durch Zusatz von Aluminiumisopropanolat als Katalysator in exothermer Reaktion umgesetzt. Als Reaktionsprodukt entsteht hier unmittelbar aus zwei Molekülen Aldehyd der entsprechende Ester. Die Aufarbeitung erfolgt nach bekannten Methoden.

Die Carbonsäureester werden in solchen Mengen dem Kautschuk zugesetzt, daß eine Stabilisierung gegen Abbau durch Ozon eintritt. Die entsprechenden Mengen sind dem Durchschnittsfachmann geläufig oder leicht zu vermitteln. Die Dosierung beträgt beispielsweise 0,05 bis 10 Gew.-%, bevorzugt 0,5 bis 5 Gew.-%, besonders bevorzugt 1 bis 3 Gew.-%, bezogen auf den Polymergehalt.

Folgende Kautschuke können beispielsweise stabilisiert werden:

Natur- und Synthesekautschuke, die z.B. aus Butadien, Dimethylbutadien, Chloropren, Isopren und seinen Homologen erhalten werden, oder Mischpolymerisate solcher konjugierter Diolefine mit Vinylgruppen wie Styrol, α-Methylstyrol, Acrylnitril, Methacrylnitril, Acrylate, Methacrylate sowie Terpolymere aus Ethylen, Propylen mit mindestens einem nicht-konjugierten Dien wie beispielsweise Dicyclopentadien, 5-Ethyliden-2-norbornen oder 1,4-Hexadien.

Die Ozonschutzmittel können auf übliche Weise in die Kautschuke eingemischt werden, beispielsweise auf einem Mischwalzwerk oder im Innenmischer. Sie werden vor oder gleichzeitig mit anderen Bestandteilen eingearbeitet oder aber auch als letzter Mischungsbestandteil zugegeben.

Andere Bestandteile einer Kautschukmischung sind üblicherweise:

Schwefel, Beschleuniger wie Thiazole (2-Merkaptobenzthiazol, Dibenzothiazyldisulfid), Sulfenamide (Benzothiazyl-2-cyclohexylsulfenamid, Benzothiazyl-2-t-butylsulfenamid oder Benzothiazylsulfensäuremorpholid), Guanidine (Diphenylguanidin oder Di-o-tolylguanidin), Dithiocarbamate (Zink-diethyldithiocarbamat), Thiurame (Tetramethylthiuramdisulfid), Ethylenthioharnstoff. Weiterhin Füllstoffe wie Ruß oder Kreide, Antioxidantien, Pigmente, Zinkoxid, Stearinsäure und Verarbeitungsöle.

Die Vulkanisation der Kautschuke erfolgt durch Erhitzen auf die üblichen Temperaturen, vorzugsweise 120-170°C, doch kann auch höher oder tiefer gearbeitet werden.

Unter Umständen ist es empfehlenswert, neben den Carbonsäureestern noch Wachse dem Kautschuk zuzugeben, da dadurch in einigen Fällen die Ozonschutzwirkung noch gesteigert werden kann.

Das Gewichtsverhältnis von Wachs zu den Carbonsäureestern kann in weiten Grenzen schwanken, bevorzugt liegt es zwischen 0,25 und 2,5 zu 1.

Die Wachse bestehen mindestens teilweise aus mikrokristallinen Paraffinen. Makrokristalline Paraffine sind solche, deren Refraktionsindex $n_D^{100}$ niedriger liegt als der nach der Gleichung:
$n_D^{100}$ = 0,00035 t + 1,4056 t = Erstarrungspunkt in °C
berechnete, während mikrokristalline Paraffine solche darstellen, deren Refraktionsindex höher liegt als der nach der obigen Formel berechnete (vgl. auch für die Definition Petroleum Waxes, Proceedings of ASTM-TAPPI Symposium on Petroleum Waxes, Febr. 63, TAPPI-STAP No. 2, S. 1 bis 19).

Folgende Artikel können aus Kautschuk beispielsweise hergestellt werden:
Dichtungen, beschichtete Gewebe, Kabelmäntel, weiße Seitenwände von Autoreifen, Sportartikel, Schläuche.

Beispiel A

Folgende Kautschukmischung wurde auf der Walze hergestellt:

| | |
|---|---|
| Polychloropren | 100,0 Gew.-Teile |
| Magnesiumoxid | 4,0 Gew.-Teile |
| Stearinsäure | 0,5 Gew.-Teile |
| Gefällte Kieselsäure (BET-Oberfläche 180 $m^2/g$) | 20,0 Gew.-Teile |
| Weichkaolin | 170,0 Gew.-Teile |
| Titandioxid | 5,0 Gew.-Teile |
| Antimonoxid | 5,0 Gew.-Teile |
| Naphthenischer Mineralölweichmacher | 20,0 Gew.-Teile |
| Chlorparaffin | 10,0 Gew.-Teile |
| Ethylenthioharnstoff | 1,2 Gew.-Teile |
| Zinkoxid | 5,0 Gew.-Teile |
| Ozonschutzmittel | gemäß Tabellen |

Von diesen Mischungen wurden Prüfkörper von 0,4 x 4,5 x 4,5 cm und 0,4 x 4,5 x 5,5 cm vulkanisiert (Preßvulkanisation 30 min. bei 150°C). Je 4 Prüfkörper wurden dann in einen Kunststoffrahmen so eingespannt, daß an der Oberfläche Dehnungen von 10, 20, 30 und 60 % entstanden. Die gespannten Prüfkörper wurden mit einem Luftstrom, der 100 Teile Ozon auf 100 Millionen Teile Luft enthielt, bei Raumtemperatur behandelt. Nach jeweils 2, 4, 6, 8, 24, 48, 72, 96 und 168 Stunden wurden die Proben mit dem Auge auf eventuelle Risse untersucht. In den nachfolgenden Tabellen sind jeweils die Stunden bis

zur ersten Rißbildung eingetragen. Nach 168 Stunden wurden die Versuche abgebrochen.

Tabelle 1

| Dehnung in % | | 10 | 20 | 30 | 60 |
|---|---|---|---|---|---|
| ohne Ozonschutzmittel (Vergleich) | | 24 | 24 | 6 | 4 |
| Bicyclo(2.2.1)hept-5-en-2-carbonsäure-bicyclo(2.2.1)hept-5-en-2-ylmethylester | 0,5 Gew.-T. | >168 | >168 | 48 | 24 |
| | 1,0 Gew.-T. | >168 | >168 | >168 | >168 |
| Bicyclo(2.2.1)hept-5-en-2-carbonsäure-$\Delta^3$-tetrahydrobenzylester | 0,5 Gew.-T. | >168 | >168 | >168 | 8 |
| | 1,0 Gew.-T. | >168 | >168 | >168 | >168 |
| Bis($\Delta^3$-tetrahydrobenzoesäure)-ethylenglykolester | 0,5 Gew.-T. | >168 | 48 | 8 | 6 |
| | 1,0 Gew.-T. | >168 | >168 | >168 | >168 |
| Bis($\Delta^3$-tetrahydrobenzoesäure)-benzol-1,4-diolester | 1,0 Gew.-T. | >168 | >168 | >168 | 24 |
| Cyclohexen-$\Delta^3$-ylidenmethyl-benzylether (Vergleich) | 0,5 Gew.-T. | >168 | 48 | 8 | 6 |
| | 1,0 Gew.-T. | >168 | >168 | 48 | 24 |

Beispiel B

Folgende Kautschukmischung wurde auf der Walze hergestellt:

| | | |
|---|---|---|
| Naturkautschuk | 100,0 | Gew.-Teile |
| Zinkoxid | 10,0 | Gew.-Teile |
| Gefällte Kreide | 160,0 | Gew.-Teile |
| Titandioxid | 10,0 | Gew.-Teile |
| Stearinsäure | 0,7 | Gew.-Teile |
| Ozonschutzwachs | 2,0 | Gew.-Teile |
| Dibenzothiazyldisulfid | 1,0 | Gew.-Teile |
| Hexamethylentetramin | 0,25 | Gew.-Teile |
| Schwefel | 2,2 | Gew.-Teile |
| Ozonschutzmittel | 4,0 | Gew.-Teile |

Die Prüfkörper wurden in der Presse 30 min. bei 140°C vulkanisiert. Die Prüfung wurde ebenso durchgeführt wie im Beispiel A beschrieben, allerdings betrug die Ozonkonzentration statt 100 Teile jetzt 200 Teile pro 100 Millionen Teile Luft.

Tabelle 2

| Dehnung in % | 10 | 20 | 30 | 60 |
|---|---|---|---|---|
| ohne Ozonschutzmittel (Vergleich) | 2 | 2 | 2 | 2 |
| Bicyclo(2.2.1)hept-5-en-2-carbonsäure-bicyclo(2.2.1)hept-5-en-2-ylmethylester | >168 | >168 | >168 | 2 |
| Bicyclo(2.2.1)hept-5-en-2-carbonsäure-$\Delta^3$-tetrahydrobenzylester | >168 | >168 | 2 | 2 |
| Bis($\Delta^3$-tetrahydrobenzoesäure)-ethylenglykolester | 8 | 6 | 6 | 6 |
| Bis($\Delta^3$-tetrahydrobenzoesäure)-benzol-1,4-diol-ester | 24 | 4 | 2 | 2 |
| Umsetzungsprodukt aus Pentaerythrit mit Tetrahydro-$\Delta^3$-benzaldehyd (Vergleich) | 8 | 6 | 4 | 2 |

Beispiel C

Folgende Kautschukmischung wurde auf der Walze hergestellt:

| | |
|---|---|
| Styrol-Butadien-Mischpolymerisat | 100,0 Gew.-Teile |
| Zinkoxid | 5,0 Gew.-Teile |
| Ruß (N 220) | 55,0 Gew.-Teile |
| Naphthenischer Mineralölweichmacher | 2,0 Gew.-Teile |
| Hocharomatischer Mineralölweichmacher | 2,0 Gew.-Teile |
| Stearinsäure | 2,0 Gew.-Teile |
| Ozonschutzwachs | 2,0 Gew.-Teile |
| Benzothiazyl-2-cyclohexylsulfenamid | 1,3 Gew.-Teile |
| Schwefel | 1,6 Gew.-Teile |
| Ozonschutzmittel | 4,0 Gew.-Teile |

Die Prüfkörper wurden in der Presse 30 min. bei 150°C vulkanisiert. Die Prüfung wurde ebenso durchgeführt wie in Beispiel A beschrieben, allerdings betrug die Ozonkonzentration statt 100 Teile jetzt 200 Teile pro 100 Millionen Teile Luft.

Tabelle 3

| Dehnung in % | 10 | 20 | 30 | 60 |
|---|---|---|---|---|
| ohne Ozonschutzmittel (Vergleich) | 6 | 2 | 2 | 2 |
| Bicyclo(2.2.1)hept-5-en-2-carbonsäure-bicyclo(2.2.1)hept-5-en-2-ylmethylester | >168 | >168 | >168 | >168 |
| Umsetzungsprodukt aus Pentaerythrit rest mit Tetrahydro-$\Delta^3$-benzaldehyd (Vergleich) | >168 | 24 | 6 | 2 |

Beispiel D

Folgende Kautschukmischung wurde auf der Walze hergestellt:

| | |
|---|---|
| Styrol-Butadien-Mischpolymerisat | 50,0 Gew.-Teile |
| Naturkautschuk | 50,0 Gew.-Teile |
| Zinkoxid | 5,0 Gew.-Teile |
| Gefällte Kreide | 120,0 Gew.-Teile |
| Gefällte Kieselsäure (BET-Oberfläche: 180 m²/g) | 35,0 Gew.-Teile |
| Diethylenglykol | 2,5 Gew.-Teile |

| | |
|---|---|
| Naphthenischer Mineralölweichmacher | 10,0 Gew.-Teile |
| Stearinsäure | 1,0 Gew.-Teile |
| Ozonschutzwachs | 2,0 Gew.-Teile |
| Benzothiazyl-2-cyclohexylsulfenamid | 0,8 Gew.-Teile |
| Diphenylguanidin | 0,3 Gew.-Teile |
| Tetramethylthiuramdisulfid | 0,3 Gew.-Teile |
| Schwefel | 2,0 Gew.-Teile |
| Ozonschutzmittel | 4,0 Gew.-Teile |

Die Prüfkörper wurden in der Presse 15 min. bei 140°C vulkanisiert. Die Prüfung wurde ebenso durchgeführt wie in Beispiel A beschrieben, allerdings betrug die Ozonkonzentration statt 100 Teile jetzt 200 Teile pro 100 Millionen Teile Luft.

Tabelle 4

| Dehnung in % | 10 | 20 | 30 | 60 |
|---|---|---|---|---|
| ohne Ozonschutzmittel (Vergleich | 4 | 4 | 4 | 4 |
| Bicyclo(2.2.1)hept-5-en-2-carbonsäure-bicyclo(2.2.1)hept-5-en-2-ylmethylester | >168 | >168 | 8 | 4 |
| Bicyclo(2.2.1)hept-5-en-2-carbonsäure-$\Delta^3$-tetrahydrobenzylester | >168 | >168 | >168 | >168 |
| Bis($\Delta^3$-tetrahydrobenzoesäure)-ethylenglykolester | >168 | >168 | 24 | 6 |
| Umsetzungsprodukt aus Pentaerythrit mit Tetrahydro-$\Delta^3$-benzaldehyd (Vergleich) | 48 | 8 | 4 | 4 |

| Flüchtigkeit bei 100°C nach | 1h | 2h | 4h | 6h | 8h | 24h |
|---|---|---|---|---|---|---|
| Cyclohexen-$\Delta^3$-yliden-methyl-benzylether (Vergleich) | 2,8 | 5,8 | 11,8 | 12,8 | 21,6 | 65,6 |
| Umsetzungsprodukt aus Pentaerythrit mit Tetra-hydro-$\Delta^3$-benzaldehyd (Vergleich | 0,4 | 0,6 | 0,9 | 1,2 | 1,4 | 2,6 |
| Bicyclo(2.2.1)hept-5-en-2-carbonsäurebicyclo(2.2.1)-hept-5-ene-2-ylmethylester | 1,3 | 2,8 | 5,9 | 8,6 | 11,2 | 37,5 |

Angaben in Gewichtsprozent

Patentansprüche

1. Verfahren zur Stabilisierung von Kautschuk gegen Ozonangriff durch Zusatz von Ozonschutzmittel, dadurch gekennzeichnet, daß man als Ozonschutzmittel eine Verbindung der Formel

$$(R-\underset{\underset{O}{\|}}{C}-O)_n-R_1 \quad ,$$

in der

n Zahlen von 1 bis 6,

R einen Cyclohex-3-enylrest, der gegebenenfalls durch eine Methylgruppe substituiert sein kann oder einen Bicyclo-(2.2.1)-hept-5-en-2-ylrest, und

$R_1$ einen gesättigten oder ungesättigten aliphatischen, cycloaliphatischen oder araliphatischen Kohlenwasserstoffrest mit 1 bis 12 C-Atomen, einen aromatischen Kohlenwasserstoffrest mit 6 bis 10 C-Atomen oder einen aliphatischen oder aromatischen heterocyclischen Rest

darstellen,

in wirksamen Mengen einsetzt.

2. Verfahren gemäß Anspruch 1, dadurch gekennzeichnet, daß Verbindungen eingesetzt werden, in denen n eine Zahl von 1 bis 4 darstellt.

3. Verfahren gemäß Anspruch 1, dadurch gekennzeichnet, daß Verbindungen eingesetzt werden, in denen n die Zahl 1 darstellt.

4. Verfahren gemäß Ansprüchen 1 bis 3, dadurch gekennzeichnet, daß man die Verbindungen in Mengen von 0,05 bis 10 Gew.-%, bezogen auf Polymergehalt, den Kautschuk zusetzt.

5. Verfahren gemäß Anspruch 4, dadurch gekennzeichnet, daß man die Verbindungen in Mengen von 0,5 bis 5 Gew.-%, bezogen auf Polymergehalt, dem Kautschuk zusetzt.

6. Verfahren gemäß Anspruch 4, dadurch gekennzeichnet, daß man die Verbindungen in Mengen von 1 bis 3 Gew.-%, bezogen auf Polymergehalt, dem Kautschuk zusetzt.

7. Verfahren gemäß Ansprüchen 1-6, dadurch gekennzeichnet, daß man zusätzlich Wachse einsetzt.

8. Verfahren gemäß Anspruch 7, dadurch gekennzeichnet, daß das Gewichtsverhältnis von Wachs zu den Verbindungen der Formel in Anspruch 1 0,25-2,5:1 beträgt.

Europäisches Patentamt

# EUROPÄISCHER RECHERCHENBERICHT

0069908

Nummer der Anmeldung

EP 82 10 5709

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 026 925 (DU PONT)<br>*Seite 22, Ansprüche 1,3*<br>--- | 1 | C 08 L 21/00<br>C 08 K 5/10 |
| A | FR-A-2 154 071 (BAYER)<br>----- | 1 | |
| | | | **RECHERCHIERTE SACHGEBIETE (Int. Cl. 3)** |
| | | | C 08 L<br>C 08 K |

Der vorliegende Recherchenbericht wurde für alle Patentansprüche erstellt.

| Recherchenort | Abschlußdatum der Recherche | Prüfer |
|---|---|---|
| DEN HAAG | 13-10-1982 | GIRARD Y.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82